(19) Europäisches Patentamt
European Patent Office
Office européen des brevets

(11) Veröffentlichungsnummer : **0 065 741**
**B1**

(12) # EUROPÄISCHE PATENTSCHRIFT

(45) Veröffentlichungstag der Patentschrift : **25.07.84**

(51) Int. Cl.³ : **C 07 F 9/40**

(21) Anmeldenummer : **82104337.9**

(22) Anmeldetag : **18.05.82**

(54) **Verfahren zur Herstellung von Vinylphosphonsäurediestern.**

(30) Priorität : **22.05.81 DE 3120438**

(43) Veröffentlichungstag der Anmeldung : **01.12.82 Patentblatt 82/48**

(45) Bekanntmachung des Hinweises auf die Patenterteilung : **25.07.84 Patentblatt 84/30**

(84) Benannte Vertragsstaaten : **BE CH DE FR GB IT LI NL**

(56) Entgegenhaltungen :
**EP-A- 0 032 663**
**CHEMICAL ABSTRACTS, Band 78, Nr. 5, 5. Februar 1973, Seite 517, Nr. 29900q, Columbus, Ohio, USA**
**G.M. KOSOLAPOFF and L. MAIER: "Organic phosphorus compounds", Band 7, 1976, John Wiley & Sons, Seite 22, New York, USA**

(73) Patentinhaber : **HOECHST AKTIENGESELLSCHAFT**
**Postfach 80 03 20**
**D-6230 Frankfurt am Main 80 (DE)**

(72) Erfinder : **Kleiner, Hans-Jerg, Dr.**
**Altkönigstrasse 11a**
**D-6242 Kronberg/Taunus (DE)**
Erfinder : **Dürsch, Walter, Dr.**
**In der Braubach 4**
**D-6240 Königstein/Taunus (DE)**

**EP 0 065 741 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Vinylphosphonsäurederivate können bekanntlich aus 2-Chlorethanphosphonsäurederivaten gewonnen werden. Die Synthese dieser 2-Chlorethanphosphonsäurederivate ist aber technisch aufwendig. Ein technisch einfacherer Weg verläuft über die 2-Acetoxyethanphosphonsäurediester, die aus Vinylacetat und Dialkylphosphiten hergestellt werden können (DE-OS 21 27 821). Aus dem 2-Acetoxyethanphosphonsäuredimethylester kann man dann durch Abspaltung von Essigsäure bei 550 °C bei einer Ausbeute von nur 50 % den Vinylphosphonsäuredimethylester gewinnen [M. Yamagami et al., Nippon Kagaku Kaisha 10, 1991 (1972)]. Erwünscht ist deshalb ein neues Verfahren, das es ermöglicht, aus 2-Acetoxyethanphosphonsäurediestern Vinylphosphonsäurediester mit einer höheren Ausbeute herzustellen.

Es wurde nun überraschenderweise gefunden, daß man auf einfache und wirtschaftliche Weise Vinylphosphonsäurediester der allgemeinen Formel

$$CH_2 = CH - \overset{O}{\overset{\|}{P}}(OR)_2$$

worin R Alkylgruppen mit 1 bis 4, bevorzugt 1 bis 2 Kohlenstoffatomen bedeutet, herstellen kann, indem man 2-Acetoxyethanphosphonsäuredialkylester der allgemeinen Formel

$$CH_3COOCH_2CH_2\overset{O}{\overset{\|}{P}}(OR)_2$$

worin R die oben genannte Bedeutung hat, in Gegenwart saurer oder basischer Katalysatoren auf 150 bis 270 °C, vorzugsweise 170 bis 230 °C, erhitzt und das dabei anfallende Reaktionsprodukt mit Orthoestern der allgemeinen Formel

$$R'C(OR)_3$$

worin R' Wasserstoff oder $C_1$-$C_4$-Alkyl oder $C_1$-$C_4$-Alkoxy bedeutet, R Alkylgruppen mit 1 bis 4, bevorzugt 1 bis 2 Kohlenstoffatomen bedeutet, bei 30 bis 200 °C umsetzt.

Es ist überraschend, daß bei diesem Verfahren keine Anlagerung der Orthoester an die Vinylphosphonsäuregruppe erfolgt. Es ist nämlich bekannt, daß sich Orthoester an ungesättigte Verbindungen, wie z. B. Vinylether oder Vinylester, in Gegenwart saurer Katalysatoren anlagern können (Houben-Weyl, Methoden der Organischen Chemie, Band VI/3, S. 247-248, Georg Thieme Verlag Stuttgart, 1965).

Als Ausgangsmaterialien kommen z. B. in Frage 2-Acetoxyethanphosphonsäuredimethyl-, -diethyl-, -diisopropyl- und -di-n-butylester. Besonders bevorzugt ist der 2-Acetoxyethanphosphonsäuredimethylester. Als Orthoester kommen insbesondere zum Einsatz Orthoameisensäuretrimethyl-, -triethylester, Orthoessigsäuretrimethyl-, -triethylester, Orthopropionsäuretriethylester, Orthokohlensäuretetramethylester.

Als saure oder basische Katalysatoren kommen zahlreiche Verbindungen in Frage. Als saure Katalysatoren lassen sich verwenden :

A) Schwefelsäure oder Phosphorsäure

B) Halogenhaltige Carbonsäuren mit einem $P_{Ka}$-Wert < 2,5, wie Dichloressigsäure, Trichloressigsäure, Trifluoressigsäure

C) Aromatische Sulfonsäuren mit einem $P_{Ka}$-Wert < 2,5, wie Benzolsulfonsäure, p-Toluolsulfonsäure

D) Bevorzugt Phosphinsäuren mit 2 bis 18 Kohlenstoffatomen wie Dimethylphosphinsäure, Methylethylphosphinsäure, Di-oktylphosphinsäure, Methylphenylphosphinsäure, Diphenylphosphinsäure

E) Besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Acetoxyethanphosphonsäure, 2-Acetoxyethanphosphonsäuremonomethylester, Vinylphosphonsäure, Vinylphosphonsäuremonomethylester, Vinylphosphonsäuremonoethylester, Benzolphosphonsäure

F) Ebenfalls besonders bevorzugt Pyrophosphonsäuren oder deren Halbester wie Methanpyrophosphonsäure, Benzolpyrophosphonsäure, Vinylpyrophosphonsäure, Vinylpyrophosphonsäuremonomethylester

G) Sehr geeignet sind auch die sauren Reaktionsgemische, die beim erfindungsgemäßen Verfahren entstehen.

Als basische Katalysatoren lassen sich verwenden :

A) Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin und Tris-(p-diethylaminophenyl)-phosphin und die entsprechenden gemischten Amine, Phosphine, Phospholane und Phospholene wie Dimethylethylamin,

Diethylbutylamin, N-Dimethylanilin, 4-Methyl-N-dimethyl-anilin, N-Diethylanilin, N,N-Tetramethylphenyldiamin oder N-Methylpyrrolidin ; Methyldiethylphosphin, 1-Methylphospholen-3 und 1-Ethyl-3-methylphospholen-3 ;

B) Quatäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzylammoniumchlorid, Triethylbenzylammoniumchlorid, Triethylbenzylammoniumbromid, Trimethylbenzylphosphoniumchlorid, Triphenylethylphosphonium-2,4-diaminobenzosulfat ;

C) Heterocyclische Verbindungen mit aromatischem Charakter wie Pyridin, Chinolin, ihre verschiedenen Alkyl- und Dialkyl-, vorzugsweise Methyl- bzw. Dimethyl-derivate, Imidazol, N-Vinyl-imidazol, Benzthiazol, 2-Amino-6-ethoxybenzthiazol, ferner Phosphabenzole ;

D) Säureamide wie Dimethylformamid, Dimethylformamid, N-Dimethylacetamid, N-Diethylpropionamid, N-Dimethylbenzamid, N-Methyl-pyrrolidon, N,N'-Tetramethylterephthalsäurediamid oder Harnstoffe wie Tetramethylharnstoff und Trimethylphenylharnstoff ;

E) Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexyl- phosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-1-methylphosphinoxid, Triphenylphosphin-dichlorid, Dimethyldodecylphosphinsulfid, Triphenylphosphinimin, Dimethylchlormethylphosphin-dichlorid, N-2-Dimethylphosphinylethylmethyl-acetamid, N-2-Dimethylphosphinyl-ethyl-methyl-amin, Phospholenoxid wie 1-Methylphospholen-1-oxid und 1-Ethyl-3-methyl-phospholen-1-oxid ;

F) Amide der phosphinigen und phosphonigen Säuren und der Phosphin- und Phosphonsäuren sowie ihrer Thioanaloga, wie Ethanphosphonsäure-bis-diethylamid, Methan-butan-phosphinigsäure-dimethylamid, Diethylphosphinigsäureisobutylamid. Ferner Triamide der Phosphor- und der Thiophosphorsäure wie Hexamethylphosphorsäure-triamid.

Die Katalysatoren werden in Mengen von 0,01 bis 10, bevorzugt 0,1 bis 5 Gew.-% eingesetzt. Bei Verwendung von Vinylphosphonsäure, deren Monoalkylestern oder der bereits gewonnenen sauren Reaktionsgemische können auch größere Mengen von 10 bis 50 Gew.-% eingesetzt werden.

Das Verfahren wird im allgemeinen so durchgeführt, daß das Ausgangsprodukt mit dem Katalysator vermischt wird und auf die erforderliche Reaktionstemperatur von 150 bis 270 °C, vorzugsweise 170 bis 230 °C gebracht wird.

Höhere Temperaturen sind möglich, bringen aber keinen Vorteil. Es besteht dann die Gefahr der verstärkten Bildung von Nebenprodukten, aber auch der Polymerisation.

Bei dieser Reaktion spaltet sich Alkylacetat ab und es entsteht im wesentlichen ein Vinylphosphonsäurehalbester. Das Alkylacetat wird zusammen mit geringen Mengen Alkanol und Dialkylether abdestilliert. Die Destillation erfolgt unter Normaldruck, gegebenenfalls unter Zuhilfenahme eines Inertgases, wie z. B. Stickstoff. Es kann jedoch im Einzelfall vorteilhaft sein, im Vakuum abzudestillieren. Die Abspaltung des Alkylacetats ist nach 2 bis etwa 20 Stunden beendet. Es kann zweckmäßig sein, danach noch 1 bis 4 Stunden bei der Reaktionstemperatur nachzurühren. Das Verfahren kann auch kontinuierlich gestaltet werden. Zur Verhinderung einer Polymerisation ist es von Vorteil, entsprechende Inhibitoren wie z. B. Hydrochinon, Hydrochinonmonomethylether oder Phenothiazin, zuzusetzen.

Geht man von 2-Acetoxyethanphosphonsäurediestern aus, die von ihrer Herstellung her mit geringen Mengen des entsprechenden Monoesters verunreinigt sind, ist ein weiterer Zusatz eines Katalysators nicht notwendig. Es ist dabei zweckmäßig, die Reaktion bei etwa 250 °C zu beginnen. Wenn sich dann das saure Reaktionsprodukt, das ja ebenfalls als Katalysator für die Reaktion wirkt, in genügendem Ausmaß gebildet hat, kann man das Verfahren bei tieferen Temperaturen, beispielsweise bei 180 bis 220 °C, weiterführen.

Der in der ersten Stufe entstehende rohe Vinylphosphonsäurehalbester wird mit den Orthoestern bei 30 bis 200 °C umgesetzt unter gleichzeitiger Bildung von Carbonsäureestern bzw. Kohlendioxid und den entsprechenden Alkoholen. Bei der Bildung der Carbonsäureester und der Alkohole ist es zweckmäßig, in einem solchen Temperaturbereich zu arbeiten, daß die Carbonsäureester und die Alkohole im Zuge ihrer Bildung abdestillieren. Bezogen auf den Vinylphosphonsäurehalbester werden in der Regel mindestens ein Mol Orthoester eingesetzt, bevorzugt 1,5 bis 2 Mol. Weitere Überschüsse ergeben keinen wesentlichen Vorteil. Eine besonders zweckmäßige Methode der Umsetzung besteht darin, den Halbester mit etwa der gleichen Menge an fertigem Vinylphosphonsäurediester, wie er als Reaktionsprodukt anfällt, zu mischen und etwa 1 Stunde bei erhöhter Temperatur, z. B. 160 °C, zu belassen und dann dieses Reaktionsgemisch mit dem Orthoester umzusetzen. Bei dieser Verfahrensweise ist der sonst zu beobachtende Zwangsanfall an Dialkylether geringfügig und die Ausnutzung des Alkylierungspotentials des Orthoesters optimal. Man kann auch den rohen Vinylphosphonsäurehalbester mit dem Orthoester mischen, wobei der Orthoester vorgelegt und der Vinylphosphonsäurehalbester zudosiert wird oder umgekehrt und bei der jeweils erforderlichen Reaktionstemperatur abreagieren lassen. Bei Verwendung von Orthokohlensäureestern liegt diese Reaktionstemperatur bei ca. 30 bis 90 °C, während beim Ameisensäureorthoester und den höheren Carbonsäureorthoestern eine Temperatur von ca. 30 bis 160 °C erforderlich ist. Das Verfahren kann auch kontinuierlich gestaltet werden.

Die bei dem vorliegenden Verfahren anfallenden Vinylphosphonsäurediester werden durch Destillation gereinigt. Sie enthalten in der Regel geringere Mengen an Trialkylphosphaten, die gegebenenfalls durch geeignete Verfahren, z. B. Destillationsverfahren, abtrennbar sind.

Vinylphosphonsäuredialkylester sind seit langem wohlbekannte Zwischenprodukte zur Herstellung von z. B. Flammhemmitteln, Flotationshilfsmitteln und Farbstoffen. Sie sind weiterhin als Comonomere für die Herstellung zahlreicher synthetischer Polymere bekannt.

Beispiel 1

100 g 2-Acetoxyethanphosphonsäuredimethylester werden unter Rühren auf 220-230 °C erhitzt. Dazu wird während 6 Stunden ein Gemisch von 200 g 2-Acetoxyethanphosphonsäuredimethylester und 3 g 4-(Dimethylamino)-pyridin zugetropft, gleichzeitig destillieren 112 g Methylacetat ab. In einer der Apparatur nachgeschalteten Kühlfalle sammeln sich 6 g Dimethylether. Es verbleiben 171 g eines rohen Vinylphosphonsäuremonomethylesters. 80 g dieses Reaktionsproduktes und 93 g Orthoessigsäuretrimethylester werden gemischt und während 4,5 Stunden langsam bis zu einer Innentemperatur von 150 °C unter Rühren erhitzt, während Methylacetat und Methanol abdestillieren. Dann werden bei Raumtemperatur erneut 35 g Orthoessigsäuretrimethylester zugesetzt (Molverhältnis Vinylphosphonsäuremonomethylester : Orthoester beträgt ca. 1 : 1,6) und wieder langsam auf 150 °C unter Abdestillation von Methylacetat erhitzt. Insgesamt erhält man 90 g eines Gemisches von Methylacetat und Methanol. Der Rückstand wird bei 0,5 Torr (0,67 mbar) destilliert. Man erhält 86 g Vinylphosphonsäuredimethylester, der 7 % Trimethylphosphat auf Grund des $^{31}$P-NMR-Spektrums enthält. Der Destillationsrückstand beträgt 7 g. Bezogen auf den eingesetzten 2-Acetoxyethanphosphonsäuredimethylester beträgt die Ausbeute an reinem Vinylphosphonsäuredimethylester 83,5 % d. Th.

Beispiel 2

276 g eines rohen Vinylphosphonsäuremonomethylesters, der wie in Beispiel 1 hergestellt wurde, werden mit 376 g Orthoameisensäuretrimethylester vermischt und während 8 Stunden langsam auf 150 °C unter Rühren erhitzt, während 8 Stunden langsam auf 150 °C unter Rühren erhitzt, während Methylformiat und Methanol abdestillieren. Dann werden erneut 100 g Orthoameisensäuretrimethylester (Molverhältnis Vinylphosphonsäuremonomethylester : Orthoester beträgt ca. 1 : 2) bei Raumtemperatur zugesetzt und die Temperatur langsam während 13 Stunden auf 150 °C unter Abdestillation von Methylformiat und Methanol gesteigert. Der Rückstand wird bei 0,5 Torr (0,67 mbar) destilliert. Man erhält 273 g Vinylphosphonsäuredimethylester, der 6 % Trimethylphosphat auf Grund des $^{31}$P-NMR-Spektrums enthält. Der Destillationsrückstand beträgt 47 g. Bezogen auf den eingesetzten rohen Vinylphosphonsäuremonomethylester beträgt die Ausbeute an reinem Vinylphosphonsäuredimethylester 76 % d. Th.

Beispiel 3

In 80 g eines rohen Vinylphosphonsäuremonomethylesters, der wie in Beispiel 1 hergestellt wurde, werden bei Raumtemperatur 150 g Orthokohlensäuretetramethylester unter Rühren eingetropft. Es tritt eine leichte Temperaturerhöhung auf 35 °C auf unter gleichzeitiger Abspaltung von Kohlendioxid. Nun wird während etwa 2,5 Stunden langsam auf 87 °C erhitzt unter ständiger Abspaltung von Kohlendioxid. Anschließend wird destilliert bei 0,5 Torr (0,67 mbar). Dabei erhält man 74 g Vinylphosphonsäuredimethylester und in einer der Apparatur nachgeschalteten Kühlfalle ein Gemisch von ca. 30 g Methanol und 77 g nicht umgesetzten Orthokohlensäuretetramethylester. Für die Umsetzung der eingesetzten 80 g eines rohen Vinylphosphonsäuremonomethylesters wurden daher 73 g Orthokohlensäuretetramethylester verbraucht (Molverhältnis Vinylphosphonsäuremonomethylester : Orthoester 1 : 0,8).

Beispiel 4

25 g Vinylphosphonsäure und 70 g 2-Acetoxyethanphosphonsäurediethylester werden unter Rühren auf 180 °C erhitzt. Nun werden 252 g 2-Acetoxyethanphosphonsäurediethylester langsam während 14 Stunden bei allmählicher Steigerung der Temperatur auf 200 °C eingetropft, während Ethylacetat abdestilliert. Anschließend wird 9 Stunden bei 190 °C nachgerührt. Man erhält 190 g rohen Vinylphosphonsäuremonoethylester. Die Abdestillation ergab 128 g Ethylacetat und zusätzlich 8 g Leichtsieder, die in einer der Apparatur nachgeschalteten Kühlfalle aufgefangen wurden. 95 g des rohen Vinylphosphonsäuremonoethylesters werden mit 124 g Orthoameisensäuretriethylester 8 Stunden am Rückfluß gehalten bei ca. 75 °C. Dann wird die Temperatur langsam während 5,5 Stunden gesteigert auf 150 °C, während Ethylacetat und Ethanol abdestillieren. Nun werden bei Raumtemperatur erneut 100 g Orthoameisensäuretriethylester zugesetzt und wieder langsam bis 150 °C unter Abdestillation der Leichtsieder erhitzt. In einer des Apparatur nachgeschalteten Kühlfalle sammeln sich weniger als 1 g. Anschließend wird destilliert. Man erhält 96,5 g Vinylphosphonsäuredimethylester. Das entspricht einer Ausbeute von ca. 70 %, bezogen auf die eingesetzte Menge an Vinylphosphonsäure und an 2-Acetoxyethanphosphonsäurediethylester. Während der Umsetzung mit dem Orthoester destillieren ca. 160 g ab, die neben ca. 60 % Ethylformiat 28 % Ethanol und ca. 10 % Diethylether enthalten.

Beispiel 5

80 g eines rohen Vinylphosphonsäuremonomethylesters, wie er in Beispiel 1 gewonnen wurde, werden mit 80 g nach Beispiel 1 gewonnenen Vinylphosphonsäuredimethylester gemischt und 2 Stunden auf 160 °C gehalten. Das so erhaltene Gemisch wird in 148 g Orthoessigsäuretrimethylester bei 100 °C unter Rühren während 6 Stunden zugetropft. Dabei destillieren 93 g eines Gemisches von Methylacetat und Methanol ab. Leichtsieder sind in einer der Apparatur nachgeschalteten Kühlfalle nicht zu beobachten. Es wird dann noch auf 145 °C erhitzt. Schließlich wird destilliert. Man erhält 153 g Vinylphosphonsäuredimethylester und 22 g Destillationsrückstand. In der Kühlfalle der Destillationsapparatur finden sich 22 g, die im wesentlichen Orthoessigsäuretrimethylester darstellen. Es wurden 73 g Vinylphosphonsäuredimethylester erhalten.

Beispiel 6

30 g Vinylphosphonsäure und 80 g 2-Acetoxyethanphosphonsäurediethylester werden gemischt und unter Rühren auf 175-180 °C erhitzt. Nun werden während 4 Stunden bei dieser Temperatur, 13 Stunden bei 185 °C und 6 Stunden bei 190 °C 500 g 2-Acetoxyethanphosphonsäurediethylester eingetropft, während 187 g Ethylacetat abdestillieren. In einer der Apparatur nachgeschalteten Kühlfalle sammeln sich 2 g Leichtsieder. Das anfallende Reaktionsgemisch (305 g) wird noch 1 Stunde bei 200 °C gehalten. Man erhält jetzt 295 g eines rohen Vinylphosphonsäuremonomethylester. 81 g dieses Produktes werden mit 106 g Orthoameisensäuretriethylester gemischt und während 7 Stunden bis 150 °C unter Rühren erhitzt, während Ethylformiat und Ethanol abdestillieren. Nun werden bei Raumtemperatur erneut 60 g Orthoameisensäuretrimethylester zugegeben und erneut während 2 Stunden bis 150 °C erhitzt. Insgesamt sind 109 g Ethylformiat zusammen mit Ethanol und Diethylether abdestilliert. Durch Destillation des Reaktionsgemisches werden 81 g Vinylphosphonsäurediethylester erhalten, der geringe Mengen an Triethylphosphat enthält.

**Ansprüche**

1. Verfahren zur Herstellung von Vinylphosphonsäurediestern der Formel

$$CH_2 = CH - \overset{O}{\overset{\|}{P}}(OR)_2$$

worin R $C_1$-$C_4$-Alkyl bedeutet, dadurch gekennzeichnet, daß man 2-Acetoxyethanphosphonsäuredialkylester der Formel

$$CH_3COOCH_2CH_2\overset{O}{\overset{\|}{P}}(OR)_2$$

worin R die oben genannte Bedeutung hat, in Gegenwart saurer oder basischer Katalysatoren auf 150 bis 270 °C erhitzt und das dabei anfallende Reaktionsprodukt mit Orthoestern der allgemeinen Formel

$$R'C(OR)_3$$

wobei R' Wasserstoff oder $C_1$-$C_4$-Alkyl oder $C_1$-$C_4$-Alkoxy bedeutet und R die oben genannte Bedeutung hat, bei 30 bis 200 °C umsetzt.

2. Verfahren nach Anspruch 1, dadurch gekennzeichnet, daß man den 2-Acetoxyethanphosphonsäuredialkylester auf eine Temperatur von 170 bis 230 °C erhitzt.

**Claims**

1. A process for preparing vinylphosphonic acid diesters of the formula

$$CH_2 = CH - \overset{O}{\overset{\|}{P}}(OR)_2$$

in which R denotes $C_1$-$C_4$-alkyl, which process is characterized by heating dialkyl 2-acetoxyethanephosphonates of the formula

$$CH_3COOCH_2CH_2\overset{O}{\overset{\|}{P}}(OR)_2$$

in which R has the abovementioned meaning, at 150 to 270 °C in the presence of acid or basic catalysts and reacting the resulting product with orthoesters of the general formula

$$R'C(OR)_3$$

in which R' denotes hydrogen, or $C_1$-$C_4$-alkyl or $C_1$-$C_4$-alkoxy and R has the abovementioned meaning, at 30 to 200 °C.

2. The process as claimed in claim 1, wherein the dialkyl 2-acetoxyethanephosphonate is heated at a temperature of 170 to 230 °C.

**Revendications**

1. Procédé de préparation de diesters de l'acide vinylphosphonique qui répondent à la formule

$$CH_2 = CH - \overset{O}{\overset{\|}{P}}(OR)_2$$

dans laquelle R représente un radical alkyle contenant de 1 à 4 atomes de carbone, procédé caractérisé en ce qu'on chauffe un acétoxy-2 éthane-phosphonate de dialkyle répondant à la formule

$$CH_3COOCH_2CH_2\overset{O}{\overset{\|}{P}}(OR)_2$$

dans laquelle R a la signification qui vient d'être donnée, en présence de catalyseurs acides ou basiques, à des températures de 150 à 270 °C, et on fait réagir le produit réactionnel qui s'est alors formé avec des ortho-esters répondant à la formule générale

$$R'C(OR)_3$$

dans laquelle R' représente l'hydrogène, un alkyle en $C_1$-$C_4$ ou un alcoxy en $C_1$-$C_4$ et R a la signification précédemment donnée, à des températures de 30 à 200 °C.

2. Procédé selon la revendication 1, caractérisé en ce qu'on chauffe l'ester dialkylique de l'acide acétoxy-2 éthane-phosphonique à une température de 170 à 230 °C.